# EUROPÄISCHE PATENTSCHRIFT

(11) **EP 0 624 629 B1**
(45) Veröffentlichungstag und Bekanntmachung des Hinweises auf die Patenterteilung: **24.03.1999**
(21) Anmeldenummer: 94810266.0
(22) Anmeldetag: 05.05.1994
(51) Int. Cl.: C09B 62/09, D06P 1/382

(54) **Faserreaktive Farbstoffe, ihre Herstellung und Verwendung**
Fibre reactive dyes, their production and their use
Colorants réactifs vis-à-vis des fibres, leur préparation et leur application

(30) Priorität: 14.05.1993 CH 1483/93
(43) Veröffentlichungstag der Anmeldung: 17.11.1994
(73) Patentinhaber: Ciba Specialty Chemicals Holding Inc., 4057 Basel (CH)
(72) Erfinder: Deitz, Rolf, CH-4058 Basel (CH); Tzikas, Athanassios, Dr., CH-4133 Pratteln (CH)

(56) Entgegenhaltungen:
- EP-A- 0 464 448
- EP-A- 0 465 939
- EP-A- 0 511 523
- DE-A- 2 601 043
- PATENT ABSTRACTS OF JAPAN, unexamined applications, C Field, Band 9, Nr. 200, 16. August 1985 THE PATENT OFFICE JAPANESE GOVERNMENT Seite 124 C 298; & JP-A-60-69 163 (SUMITOMO KAGAKU)

## Beschreibung

Die vorliegende Erfindung betrifft neue faserreaktive Farbstoffe, die zum Färben von cellulosehaltigen Fasermaterialien aus wässrigem Bad sowie zum Bedrucken cellulosehaltiger Fasermaterialien geeignet sind.

Gegenstand der Erfindung sind Verbindungen der Formel 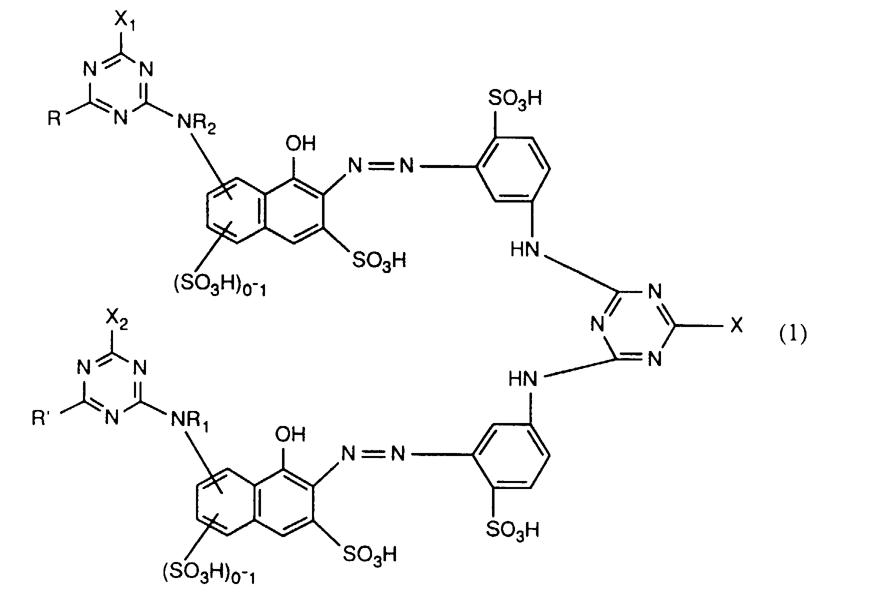 worin X, X₁ und X₂ unabhängig voneinander je für Fluor, Chlor, Brom, Hydroxy, 3-Carboxypyridin-1-yl oder 3-Carbamoylpyridin-1-yl stehen,
R₁ und R₂ unabhängig voneinander je Wasserstoff oder gegebenenfalls durch Halogen, Hydroxy, Cyano, C₁-C₄-Alkoxy, C₁-C₄-Alkoxycarbonyl, Carboxyl, Sulfo oder Sulfato substituiertes C₁-C₄-Alkyl bedeuten, und
R und R' unabhängig voneinander je für gegebenenfalls durch nicht-reaktive Reste substituiertes Amino, C₁-C₄-Alkoxy, Phenoxy, C₁-C₄-Alkylthio,
N-C₁-C₄-Alkylpiperazino oder Morpholino stehen.

Aus der JP-A-62/7765 sind Farbstoffe bekannt, weiche sich von den erfindungsgemässen Farbstoffen hinsichtlich der Stellung der Bindung des Triazin-Brückengliedes am Monoazochromophor unterscheiden.

C₁-C₄-Alkyl bedeutet generell Methyl, Ethyl, n- oder iso-Propyl oder n-, iso-, sec.- oder tert.-Butyl; C₁-C₄-Alkoxy umfasst generell Methoxy, Ethoxy, n- oder iso-Propoxy und n-, iso-, sec.- oder tert.-Butoxy; Halogen steht generell z.B. für Fluor, Brom oder insbesondere Chlor; C₁-C₄-Alkoxycarbonyl bedeutet generell Methoxycarbonyl, Ethoxycarbonyl, n- oder iso-Propoxycarbonyl oder n-, iso-, sec.- oder tert-Butoxycarbonyl, vorzugsweise Methoxycarbonyl oder Ethoxycarbonyl. C₁-C₄-Alkylthio umfasst z.B. Methylthio oder Ethylthio. In den Verbindungen der Formel (1) vorhandene Sulfogruppen können generell sowohl als freie Säure -SO₃H als auch in beliebiger Salzform, z.B. als Alkali-, Erdalkali- oder Ammoniumsalz oder als Salz eines organischen Amins vorliegen; Beispiele sind etwa das Natrium-, Kalium-, Lithium- oder Ammoniumsalz oder das Salz des Triethanolamins. Die Verbindungen der Formel (1) können auch als Mischsalz, z.B. als Lithium/Natrium- oder Lithium/Ammonium- oder als Natrium/Lithium/Ammoniumsalz vorliegen.

Beispiele für geeignete Reste R₁ und R₂ sind Wasserstoff, unsubstituiertes C₁-C₄-Alkyl, Carboxymethyl, β-Carboxyethyl, β-Carboxypropyl, Methoxycarbonylmethyl, Ethoxycarbonylmethyl, β-Methoxyethyl, β-Ethoxyethyl, β-Methoxypropyl, β-Chlorethyl, γ-Brompropyl, β-Hydroxyethyl, β-Hydroxybutyl, β-Cyanoethyl, Sulfomethyl, β-Sulfoethyl und β-Sulfatoethyl.

R₁ und R₂ stehen unabhängig voneinander je bevorzugt für Methyl, Ethyl oder Wasserstoff und bedeuten besonders bevorzugt je Wasserstoff.

Stehen R oder R' in Formel (1) für gegebenenfalls durch nicht-reaktive Reste substituiertes Amino, so ist darunter z.B. -NH₂, unsubstituiertes oder im Alkylteil z.B. durch Hydroxy, Carboxy, Sulfo, Sulfato oder C₁-C₄-Alkoxy substituiertes N-Mono- oder N,N-Di-C₁-C₄-Alkylamino, Cyclohexylamino, unsubstituiertes oder im Phenylteil z.B. durch C₁-C₄-Alkyl, C₁-C₄-Alkoxy, Carboxy, Sulfo oder Halogen substituiertes Phenylamino oder unsubstituiertes oder im Phenylteil z.B. durch C₁-C₄-Alkyl, C₁-C₄-Alkoxy, Carboxy, Sulfo oder Halogen oder im Alkylteil z.B. durch Hydroxy, C₁-C₄-Alkoxy, Sulfo oder Sulfato substituiertes N-C₁-C₄-Alkyl-N-phenylamino zu verstehen.

R und R' stehen als gegebenenfalls substituiertes Amino unabhängig voneinander je bevorzugt für Amino, Methylamino, Ethylamino, Carboxymethylamino, β-Sulfoethylamino, β-Sulfatoethylamino, β-Hydroxyethylamino, N,N-Di-β-hydroxyethylamino, Cyclohexylamino, o-, m- oder p-Methylphenylamino, o-, m- oder p-Methoxyphenylamino, o-, m- oder p-Sulfophenylamino, 2,4- oder 2,5-Disulfophenylamino, Carboxyphenylamino, N-Ethyl-N-phenylamino, N-Methyl-N-phenylamino oder N-Hydroxyethyl-N-phenylamino. Besonders bevorzugt sind für R und R' als gegebenenfalls substituiertes Amino die Bedeutungen Amino, o-, m-oder p-Sulfophenylamino, 2,5-Disulfophenylamino, Methylamino, Ethylamino, β-Hydroxyethylamino, N,N-Di-β-hydroxyethylamino, N-Methyl-N-phenylamino, N-Ethyl-N-phenylamino und N-Hydroxyethyl-N-phenylamino.

R und R' stehen als C₁-C₄-Alkylthio unabhängig voneinander je bevorzugt für Methyloder Ethylthio.

Bevorzugte Bedeutungen von R und R' sind unabhängig voneinander Amino, unsubstituiertes oder im Alkylteil durch Hydroxy oder Sulfo substituiertes N-Mono- oder N,N-Di-C₁-C₄-Alkylamino, unsubstituiertes oder im Phenylteil durch Methyl, Ethyl, Methoxy, Ethoxy, Carboxy, Sulfo oder Chlor substituiertes Phenylamino, unsubstituiertes oder im Alkylteil durch Hydroxy substituiertes N-C₁-C₄-Alkyl-N-phenylamino, Morpholino oder N-C₁-C₂-Alkylpiperazino.

Besonders bevorzugt stehen R und R' für Amino, N-C₁-C₂-Alkylamino, β-Sulfoethylamino, β-Hydroxyethylamino, N,N-Di-β-hydroxyethylamino, o-, m- oder p-Sulfophenylamino, 2,5-Disulfophenylamino, N-C₁-C₂-Alkyl-N-phenylamino, N-Hydroxyethyl-N-phenylamino oder N-C₁-C₂-Alkylpiperazino.

R und R' können verschieden oder gleich sein und stehen besonders bevorzugt für identische Substituenten.

X, X₁ und X₂ bedeuten unabhängig voneinander je bevorzugt Hydroxy oder insbesondere Chlor oder Fluor. Eine besonders bevorzugte Ausführungsform der Erfindung betrifft Verbindungen der Formel (1), worin X Chlor und X₁ und X₂ je Fluor bedeuten.

Von besonderem Interesse sind Verbindungen der Formel 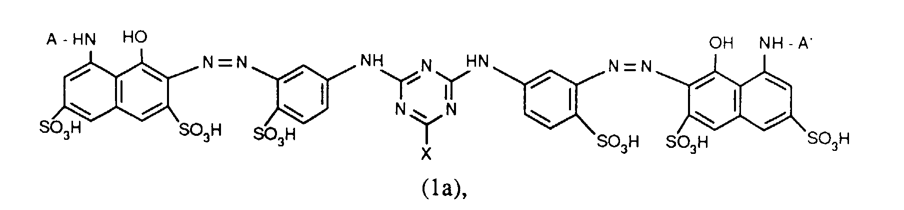 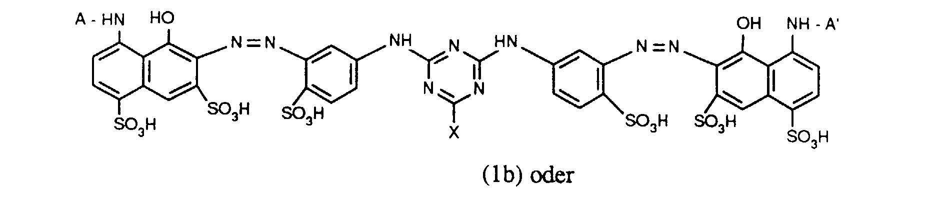 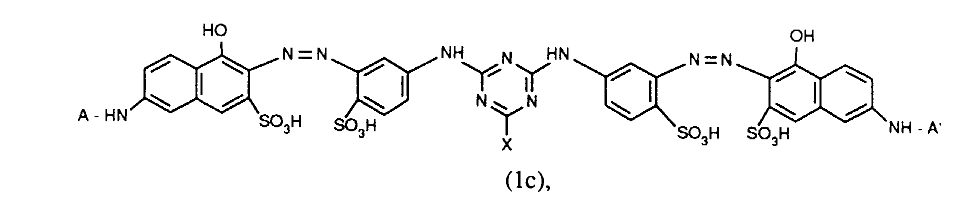 worin A und A' unabhängig voneinander je einen Rest der Formel 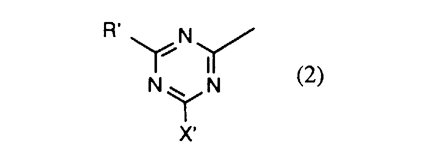 bedeuten, X und X' unabhängig voneinander je Fluor oder Chlor sind, und für R' die zuvor angegebenen Bedeutungen und Bevorzugungen gelten.

Besonders bevorzugte Ausführungsformen der vorliegenden Erfindung betreffen:
- Verbindungen der Formel (1a), (1b) oder (1c), worin A und A' identisch sind;
- Verbindungen der Formel (1a), worin X Chlor und X' Fluor sind und für R' die zuvor angegebenen Bedeutungen und Bevorzugungen gelten;
- Verbindungen der Formel (1a), worin X für Chlor und X' für Fluor steht, A und A' identisch sind und für R' die zuvor angegebenen Bedeutungen und Bevorzugungen gelten;
- Verbindungen der Formel (1b), worin X für Chlor und X' für Fluor steht und für R' die zuvor angegebenen Bedeutungen und Bevorzugungen gelten;
- Verbindungen der Formel (1c), worin X Chlor und X' Fluor sind und für R' die zuvor angegebenen Bedeutungen und Bevorzugungen gelten;
- Verbindungen der Formel (1c), worin X für Chlor und X' für Fluor steht, A und A' identisch sind und für R' die zuvor angegebenen Bedeutungen und Bevorzugungen gelten.

Die Reaktivfarbstoffe der Formel (1) können in an sich bekannter Weise hergestellt werden, z.B. indem man in etwa ein Moläquivalent einer diazotierten Verbindung der Formel 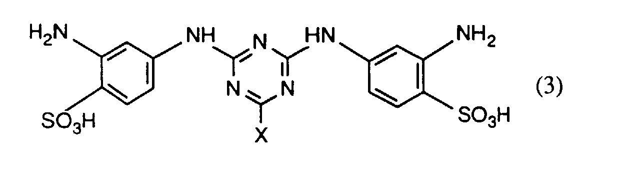 in beliebiger Reihenfolge mit in etwa einem Moläquivalent einer Verbindung der Formel 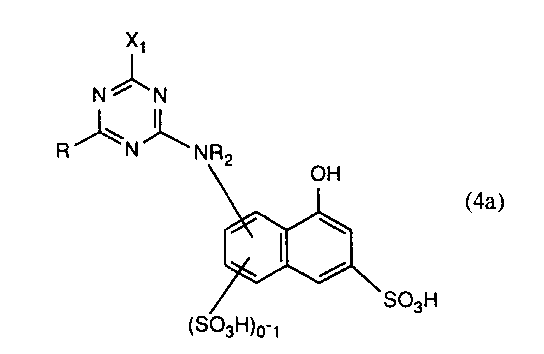 und in etwa einem Moläquivalent einer Verbindung der Formel 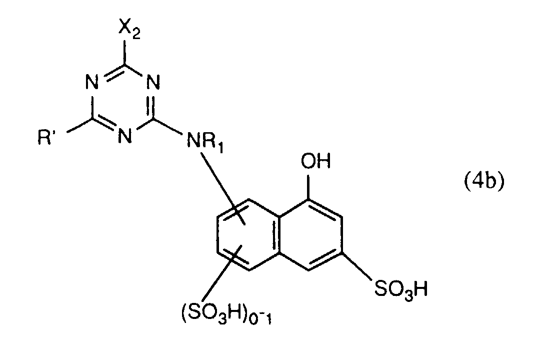 kuppelt, worin R, R', R₁, R₂, X, X₁ und X₂ jeweils die zuvor angegebene Bedeutung haben.

Handelt es sich bei den Verbindungen der Formel (4a) und (4b) um identische Verbindungen, so setzt man vorteilhaft in etwa ein Moläquivalent einer diazotierten Verbindung der Formel (3) mit in etwa zwei Moläquivalenten einer Verbindung der Formel (4a) um.

Die Verbindungen der Formel (3) sind bekannt oder können in an sich bekannter Weise hergestellt werden.

Die Verbindungen der Formel (4a) und (4b) werden vorzugsweise vorgängig in an sich bekannter Weise durch Umsetzung in etwa eines Moläquivalents einer Verbindung der Formel 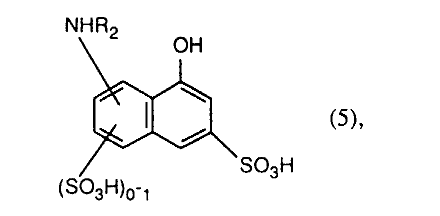 vorzugsweise von I-, J-, K- und insbesondere H-Säure,
in etwa eines Moläquivalents Halotriazins, vorzugsweise 2,4,6-Trichlor- oder 2,4,6-Trifluor-s-triazins, und in etwa eines Moläquivalents einer Verbindung der Formel

R-H (6a) bzw.

R'-H (6b),

worin R, R' und R₂ jeweils die zuvor angegebene Bedeutung haben, in beliebiger Reihenfolge erhalten.

Da die einzelnen oben angegebenen Verfahrensschritte in unterschiedlicher Reihenfolge, gegebenenfalls teilweise auch gleichzeitig, ausgeführt werden können, sind verschiedene Verfahrensvarianten möglich. Im allgemeinen führt man die Umsetzung schrittweise nacheinander aus, wobei sich die Reihenfolge der einfachen an sich bekannten Reaktionen zwischen den einzelnen Reaktionskomponenten nach den besonderen Bedingungen richtet.

Gegenstand der Erfindung ist ferner ein Verfahren zum Färben und Bedrucken von cellulosehaltigen Fasermaterialien mit den erfindungsgemässen Farbstoffen. Als Fasermaterialien kommen beispielsweise die natürlichen Cellulosefasern, wie Baumwolle, Leinen und Hanf, sowie Zellstoff und regenerierte Cellulose in Betracht. Die Farbstoffe sind auch zum Färben oder Bedrucken von hydroxylgruppenhaltigen Fasern geeignet, die in Mischgeweben enthalten sind, z.B. von Gemischen aus Baumwolle mit Polyamidfasern, oder insbesondere Polyesterfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung, fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült. Zum Färben und Bedrucken werden die üblichen Färbe- bzw. Druckverfahren angewendet.

Für das erfindungsgemässe Verfahren können die Mengen, in denen die Reaktivfarbstoffe in den Färbebädern oder Druckpasten verwendet werden, je nach der gewünschten Farbtiefe schwanken, im allgemeinen haben sich Mengen von 0,01 bis 10 Gewichtsprozent, insbesondere 0,1 bis 6 Gewichtsprozent, bezogen auf das Färbegut, als vorteilhaft erwiesen.

Die Färbeflotten können die allgemein üblichen Zusätze enthalten, beispielsweise die wässrigen Lösungen anorganischer Salze, z.B. von Alkalichloriden oder Alkalisulfaten, Alkalihydroxide, Harnstoff, Verdickungen, wie z.B. Alginatverdickungen, wasserlösliche Cellulosealkyläther sowie Dispergierhilfsmittel, Egalisierhilfsmittel und Migrationshilfsinhibitoren, ferner Natrium-m-nitrobenzolsulfonat und als weitere Verdickungsmittel beispielsweise Methylcellulose, Stärkeäther, Emulsionsverdickungen, vorzugsweise ein Alginat, z.B. Natriumalginat, sowie Netzmittel.

Bevorzugt für das erfindungsgemässe Verfahren ist das Färben nach der Ausziehmethode. Das Färben erfolgt hierbei in der Regel in wässrigem Medium, bei einem Flottenverhältnis von beispielsweise 1:2 bis 1:60, insbesondere einem Flottenverhältnis von 1:5 bis 1:20, einem pH des Färbebades von z.B. 6 bis 13 und einer Temperatur von beispielsweise 40 bis 110°C, insbesondere einer Temperatur von 60 bis 95°C.

Die erfindungsgemässen Farbstoffe zeichnen sich durch ein gutes Fixiervermögen und ein sehr gutes Aufbauvermögen aus. Sie zeichnen sich durch einen hohen Ausziehgrad aus und können nach dem Ausziehverfahren über einen sehr grossen Temperaturbereich eingesetzt werden und eignen sich deshalb auch zum Färben von Baumwolle-Polyester-Mischgeweben nach den für solche Gewebe empfohlenen Bedingungen. Die erfindungsgemässen Farbstoffmischungen eignen sich auch zum Druck, vor allem auf Baumwolle, oder von Mischgeweben, die z.B. Wolle oder Seide enthalten.

Die mit den erfindungsgemässen Farbstoffe hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit und Bügel-echtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

### Beispiel 1:

31,9 Teile 1-Amino-8-hydroxynaphthalin-3,6-disulfonsäure (H-Säure) werden in 800 ml Wasser neutral gelöst und die Lösung auf 0-5°C abgekühlt. Bei dieser Temperatur werden 14,2 Teile 2,4,6-Trifluor-1,3,5-triazin innerhalb von ca. 20 Minuten zugetropft, wobei der pH-Wert durch gleichzeitige Zugabe von 2n Natriumhydroxidlösung schwach kongosauer gehalten wird. Nach Zusatz einer auf pH 5 gestellten Mischung von 13,3 Teilen N-Ethylanilin in 100 Teilen Wasser wird der pH-Wert der Reaktionsmischung durch ständige Zugabe von 2n Natriumhydroxidlösung zuerst kurze Zeit schwach kongosauer und dann bei 5-6 gehalten. Dabei wird die Temperatur innerhalb von 2 bis 3 Stunden auf 20 bis 25°C erhöht.

Nachdem die Reaktion vollständig ist, wird das erhaltene Zwischenprodukt bei 0 bis 10°C und pH 5 mit der Tetraazoverbindung aus 24,5 Teilen der Verbindung der Formel 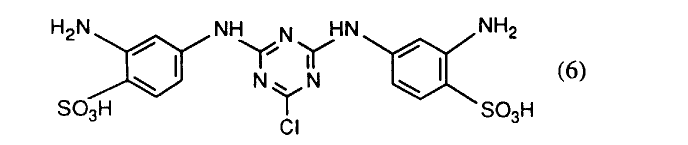 gekuppelt. Nach vollständiger Kupplungsreaktion bei pH 7 wird die Reaktionsmischung geklärt und der gebildete Reaktivfarbstoff der Formel 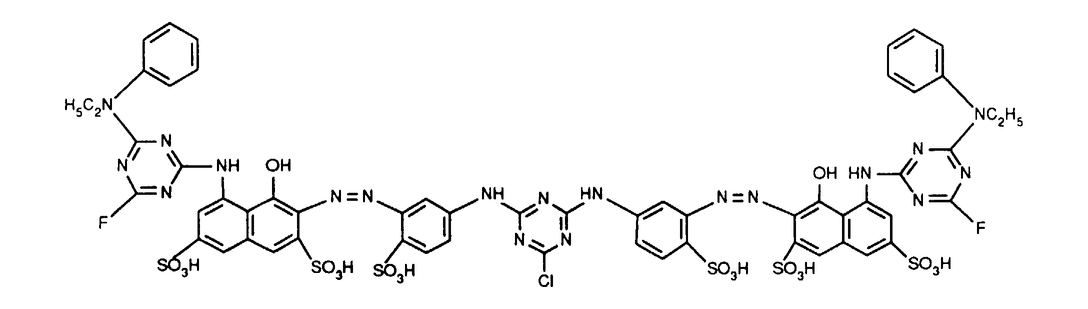 durch Eindampfen oder Gefriertrocknung der Reaktionslösung bei pH 7 isoliert. Er färbt Baumwolle in roten Tönen mit guten Allgemeinechtheiten.

### Beispiele 2 bis 13:

Analog wie im Beispiel 1 beschrieben lassen sich weitere Farbstoffe der allgemeinen Formel 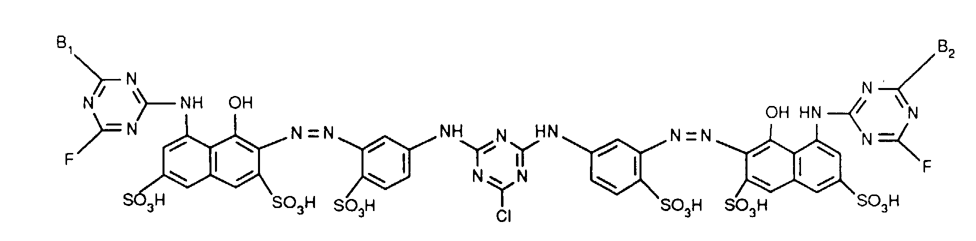 worin B₁ und B₂ die in der Tabelle 1 angegebene Bedeutung haben, herstellen:

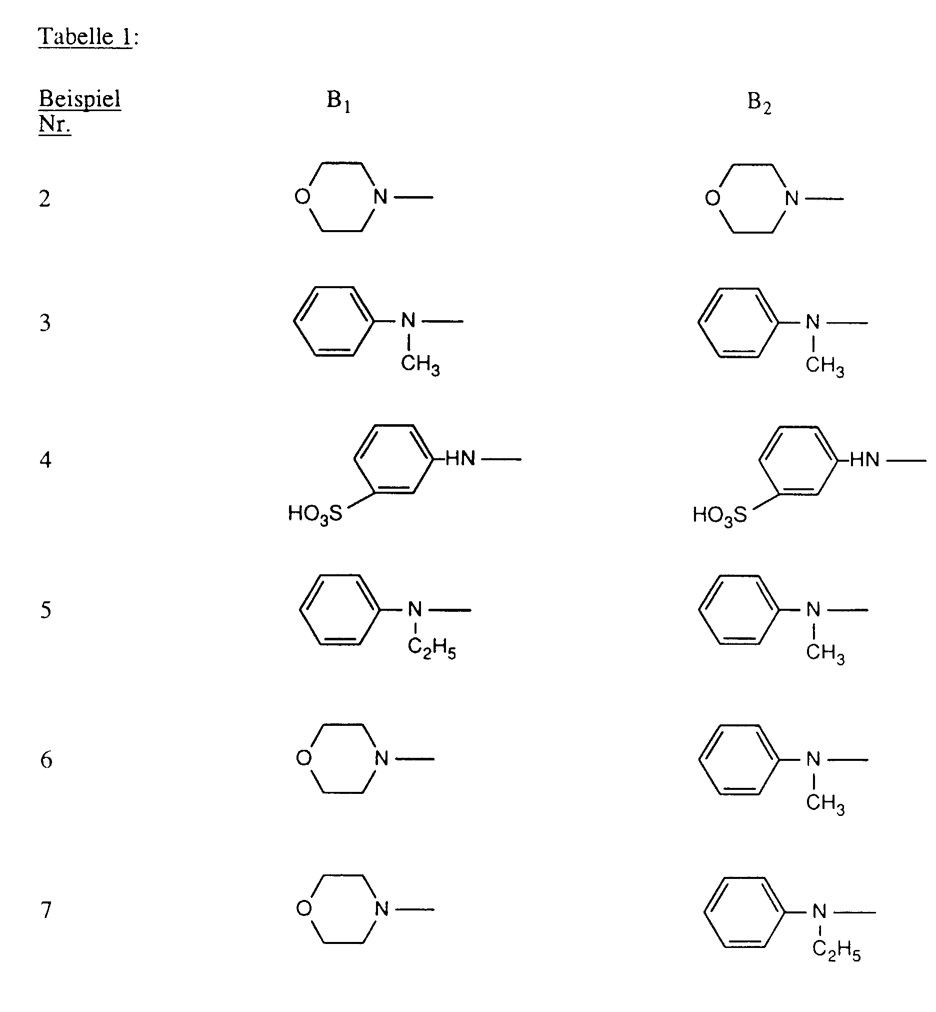

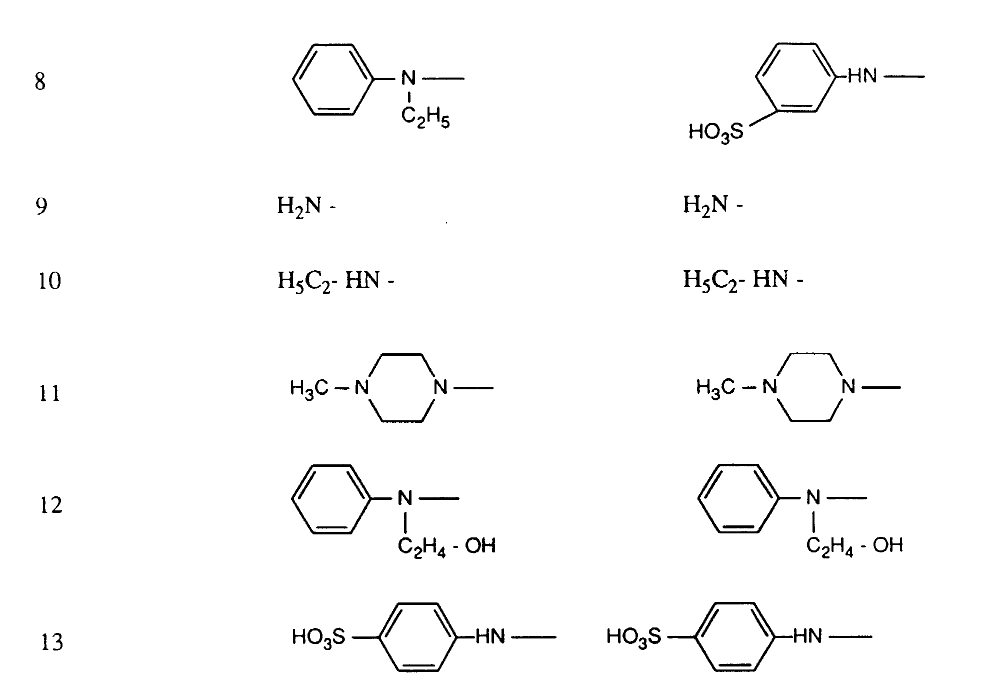

### Beispiele 14 bis 19:

Analog wie im Beispiel 1 beschrieben lassen sich weitere Farbstoffe der allgemeinen Formel 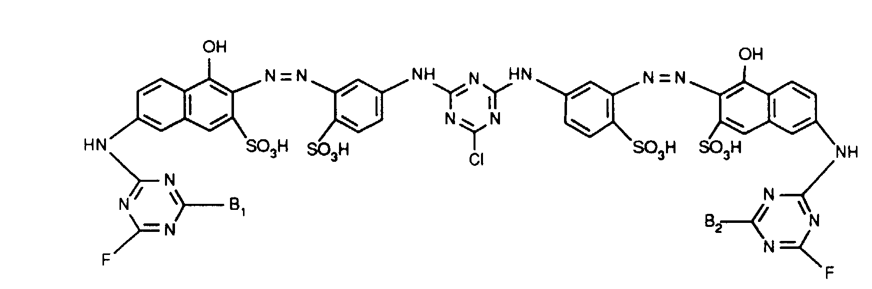 worin B₁ und B₂ die in der Tabelle 2 angegebene Bedeutung haben, herstellen:

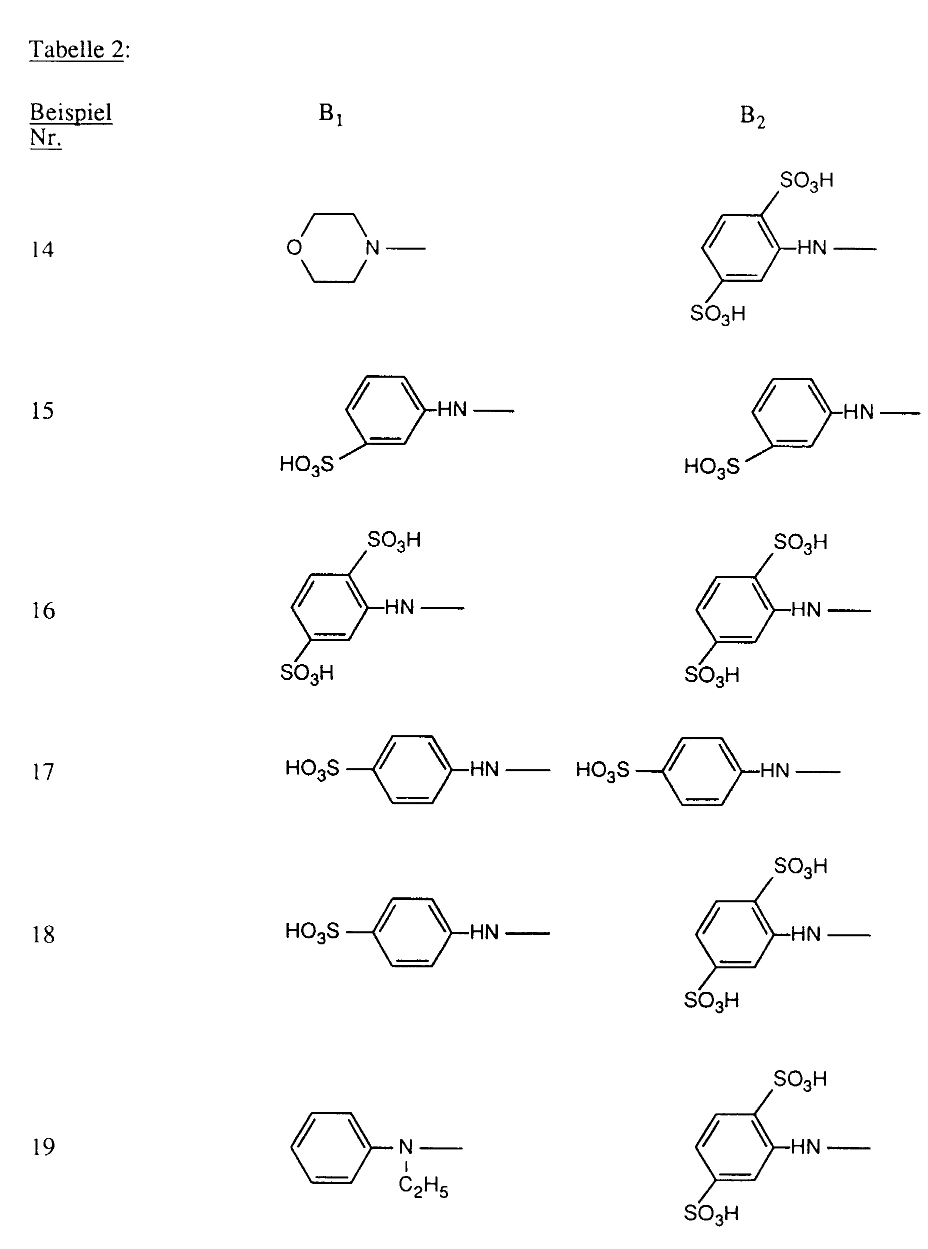

### Beispiele 20 bis 32:

Verfährt man wie in den Beispielen 1 bis 13 beschrieben und setzt anstelle der Verbindung der Formel (6) die äquivalente Menge der Verbindung der Formel 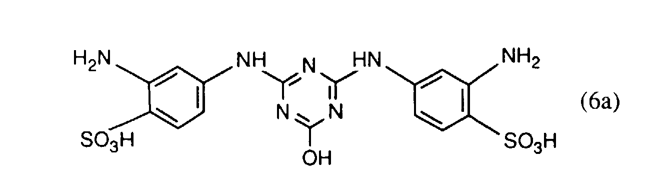 ein , lassen sich Farbstoffe der allgemeinen Formel 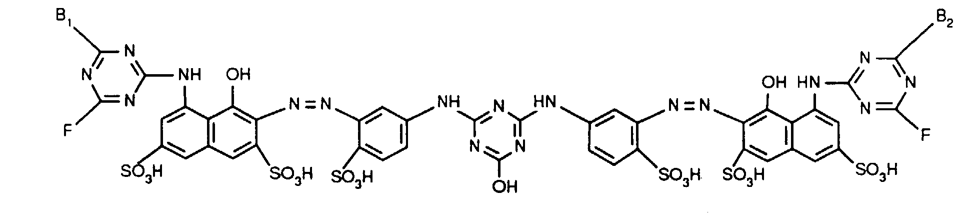 worin B₁ und B₂ die in der Tabelle 3 angegebene Bedeutung haben, herstellen:

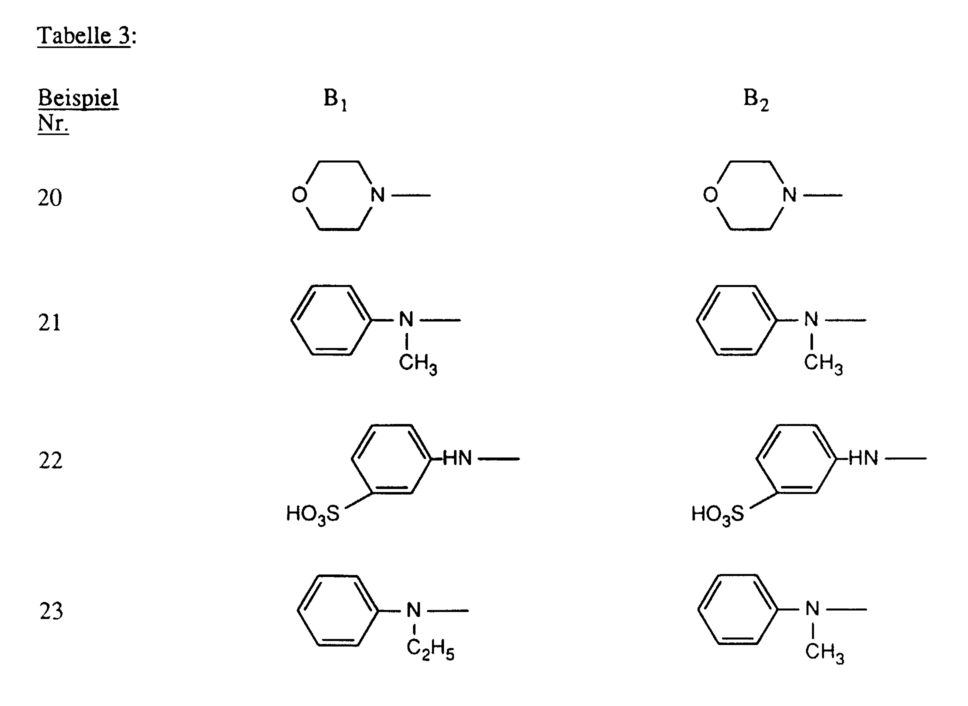

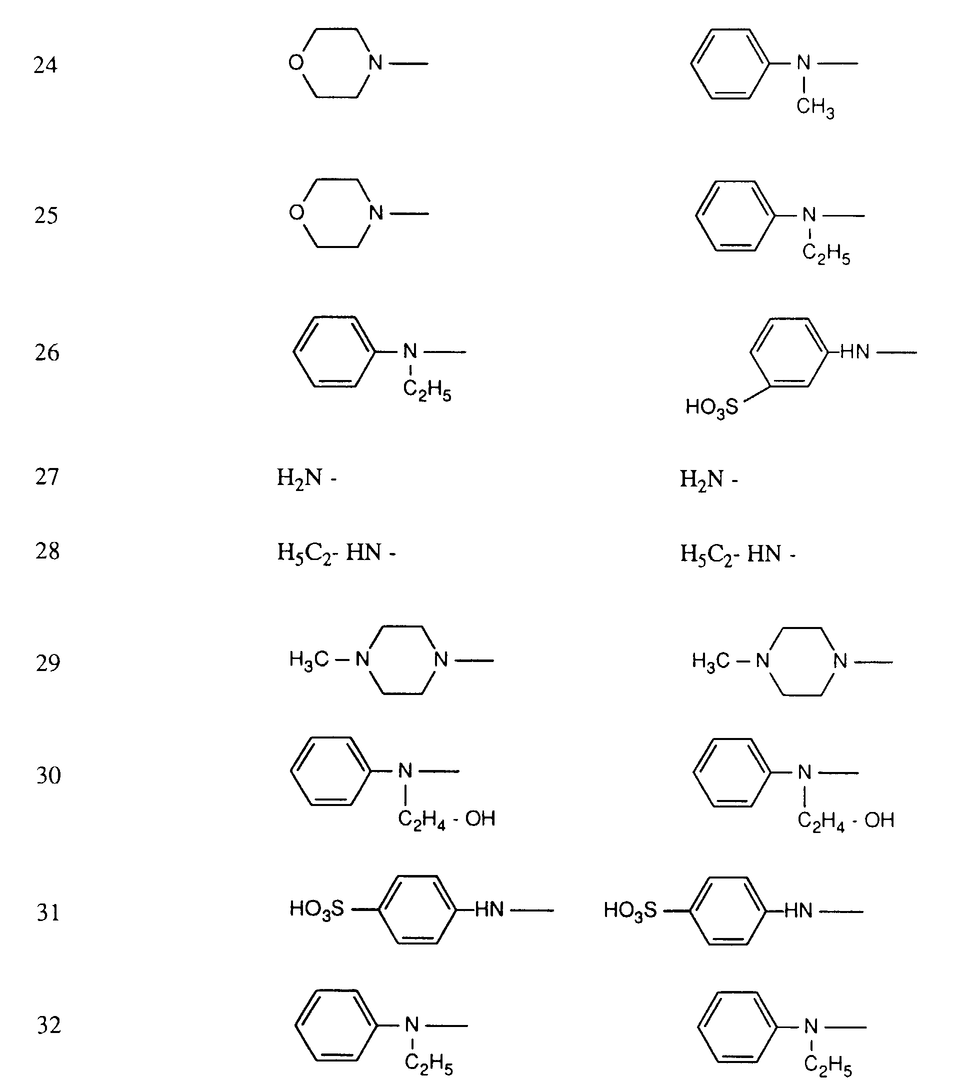

### Beispiele 33 bis 35:

Verfährt man wie in den Beispielen 1 bis 3 beschrieben und verwendet anstelle von H-Säure die äquivalente Menge 1-Amino-8-hydroxynaphthalin-4,6-disulfonsäure (K-Säure), lassen sich die Farbstoffe der allgemeinen Formel 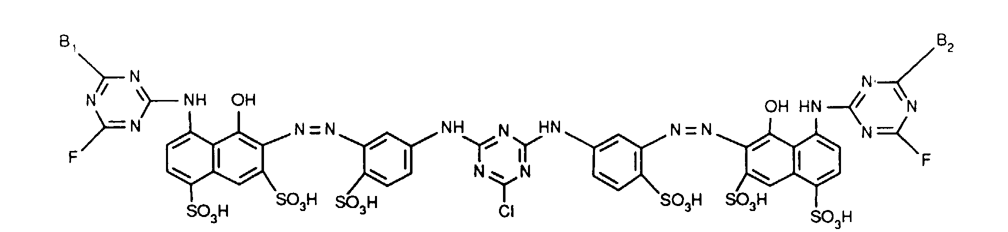 worin B₁ und B₂ die in der Tabelle 4 angegebene Bedeutung haben, herstellen:

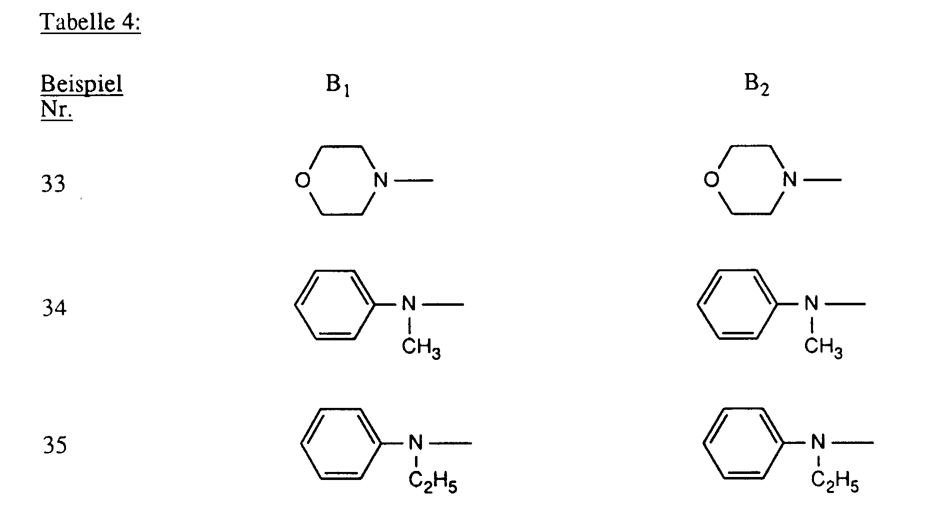

### Beispiele 36 bis 38:

Verfährt man wie in den Beispielen 1 bis 3 beschrieben und verwendet anstelle von H-Säure die äquivalente Menge K-Säure und anstelle der Verbindung der Formel (6) die äquivalente Menge der Verbindung der Formel (6a), lassen sich die Farbstoffe der allgemeinen Formel 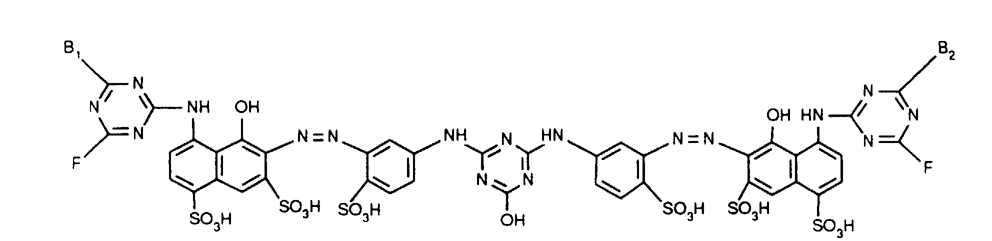 worin B₁ und B₂ die in der Tabelle 5 angegebene Bedeutung haben, herstellen:

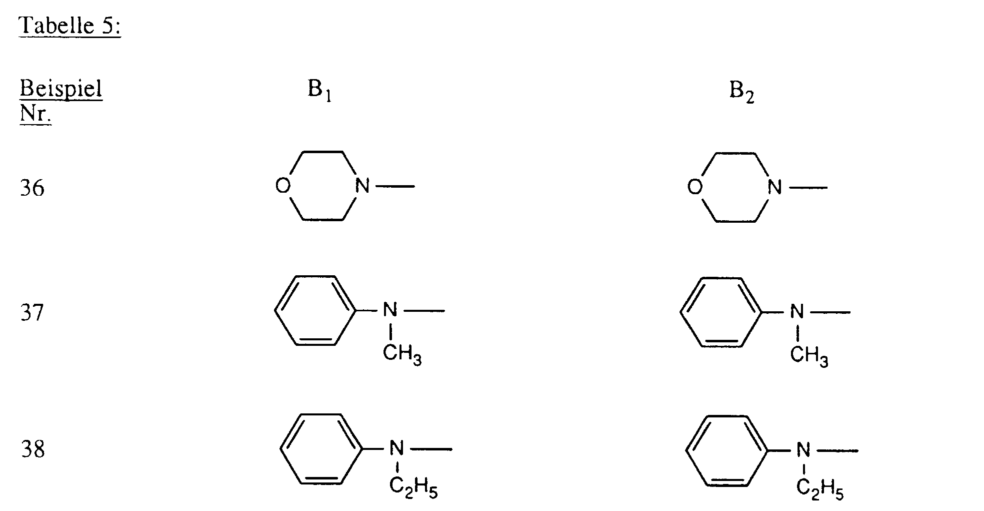

### Beispiel 39:

2 Teile Farbstoff gemäss Beispiele 1 werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g wasserfreies Na₂CO₃ enthält, zugegeben. Die Temperatur des Färbebades wird weitere 45 Minuten bei 40°C gehalten. Danach wird die rot gefärbte Ware gespült, während einer Viertelstunde mit einem nichtionogenen Waschmittel kochend geseift, nochmals gespült und getrocknet. Die erhaltene Ware zeichnet sich durch sehr gute Echtheiten aus.

### Beispiel 40:

2 Teile des gemäss Beispiel 2 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g wasserfreies Na₂CO₃ enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird die rot gefärbte Ware gespült, während einer Viertelstunde mit einem nichtionogenen Waschmittel kochend geseift, nochmals gespült und getrocknet. Die erhaltene Ware zeichnet sich durch sehr gute Echtheiten aus.

### Beispiel 41:

8 Teile des gemäss Beispiel 15 erhaltenen Farbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird die orange gefärbte Ware gespült, während einer Viertelstunde mit einem nicht-ionogenen Waschmittel kochend geseift, nochmals gespült und getrocknet. Die erhaltene Ware zeichnet sich durch sehr gute Echtheiten aus.

### Beispiel 42:

4 Teile des gemäss Beispiel 1 erhaltenen Farbstoffes werden in 50 Teilen Wasser gelöst. Dazu gibt man 50 Teile einer Lösung, die pro Liter 5 g Natriumhydroxyd und 20 g wasserfreies Na₂CO₃ enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die rot gefärbte Ware gespült, während einer Viertelstunde mit einem nichtionogenen Waschmittel kochend geseift, nochmals gespült und getrocknet. Die erhaltene Ware zeichnet sich durch sehr gute Echtheiten aus.

### Beispiel 43:

6 Teile des gemäss Beispiel 14 erhaltenen Farbstoffes werden in 50 Teilen Wasser gelöst. Dazu gibt man 50 Teile einer Lösung, die pro Liter 16 g Natriumhydroxyd und 0,04 Liter Wasserglas (38°Bé) enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 10 Stunden bei Raumtemperatur gelagert. Danach wird die orange gefärbte Ware gespült, während einer Viertelstunde mit einem nichtionogenen Waschmittel kochend geseift, nochmals gespült und getrocknet. Die erhaltene Ware zeichnet sich durch sehr gute Echtheiten aus.

### Beispiel 44:

2 Teile des gemäss Beispiel 3 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75 % Gewichtszunahme ab, dämpft die rote Färbung während 30 Sekunden bei 100 bis 102°C, spült, seift während einer Viertelstunde in einer 0,3%igen kochenden Lösung eines nichtionogenen Waschmittels, spült und trocknet. Die erhaltene Ware zeichnet sich durch sehr gute Echtheiten aus.

### Beispiel 45:

3 Teile des gemäss Beispiele 1 erhaltenen Farbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das rot bedruckte Gewebe wird dann gespült, gegebenenfalls kochend geseift und nochmals gespült, und anschliessend getrocknet. Die erhaltene Ware zeichnet sich durch sehr gute Echtheiten aus.

### Beispiel 46:

5 Teile des gemäss Beispiel 15 erhaltenen Farbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen orange bedruckten Stoff 8 Minuten bei 102°C in gesättigtem Dampf. Das bedruckte Gewebe wird dann gespült, gegebenenfalls kochend geseift und nochmals gespült, und anschliessend getrocknet. Die erhaltene Ware zeichnet sich durch sehr gute Echtheiten aus.

## Patentansprüche

1. Verbindungen der Formel 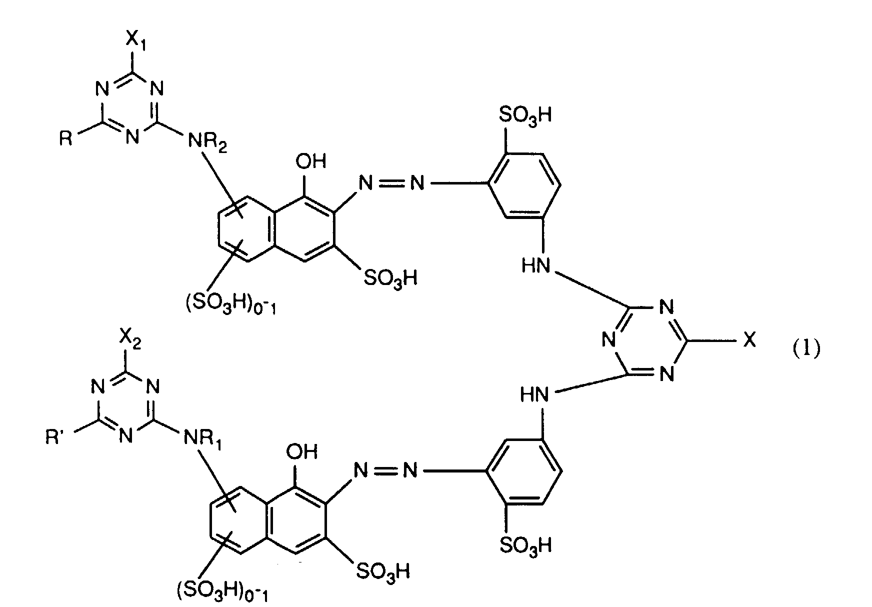 worin X, X₁ und X₂ unabhängig voneinander je für Fluor, Chlor, Brom, Hydroxy, 3-Carboxypyridin-1-yl oder 3-Carbamoylpyridin-1-yl stehen,
R₁ und R₂ unabhängig voneinander je Wasserstoff oder gegebenenfalls durch Halogen, Hydroxy, Cyano, C₁-C₄-Alkoxy, C₁-C₄-Alkoxycarbonyl, Carboxyl, Sulfo oder Sulfato substituiertes C₁-C₄-Alkyl bedeuten, und
R und R' unabhängig voneinander je für gegebenenfalls durch nicht-reaktive Reste substituiertes Amino, C₁-C₄-Alkoxy, Phenoxy, C₁-C₄-Alkylthio,
N-C₁-C₄-Alkylpiperazino oder Morpholino stehen.

2. Verbindungen gemäss Anspruch 1, dadurch gekennzeichnet, dass R₁ und R₂ je für Wasserstoff stehen.

3. Verbindungen gemäss Anspruch 1 oder 2, dadurch gekennzeichnet, dass X, X₁ und X₂ unabhängig voneinander je Chlor oder Fluor bedeuten.

4. Verbindungen gemäss einem der Ansprüche 1 bis 3, dadurch gekennzeichnet, dass X Chlor und X₁ und X₂ je Fluor bedeuten.

5. Verbindungen gemäss einem der Ansprüche 1 bis 4, dadurch gekennzeichnet, dass R und R' unabhängig voneinander je -NH₂, unsubstituiertes oder im Alkylteil durch Hydroxy, Carboxy, Sulfo, Sulfato oder C₁-C₄-Alkoxy substituiertes N-Mono- oder N,N-Di-C₁-C₄-Alkylamino, Cyclohexylamino, unsubstituiertes oder im Phenylteil durch C₁-C₄-Alkyl, C₁-C₄-Alkoxy, Carboxy, Sulfo oder Halogen substituiertes Phenylamino, unsubstituiertes oder im Phenylteil durch C₁-C₄-Alkyl, C₁-C₄-Alkoxy, Carboxy, Sulfo oder Halogen oder im Alkylteil durch Hydroxy, C₁-C₄-Alkoxy, Sulfo oder Sulfato substituiertes N-C₁-C₄-Alkyl-N-phenylamino, Morpholino oder N-C₁-C₄-Alkylpiperazino bedeuten.

6. Verbindungen gemäss einem der Ansprüche 1 bis 5, dadurch gekennzeichnet, dass R und R' unabhängig voneinander Amino, unsubstituiertes oder im Alkylteil durch Hydroxy oder Sulfo substituiertes N-Mono- oder N,N-Di-C₁-C₄-Alkylamino, unsubstituiertes oder im Phenylteil durch Methyl, Ethyl, Methoxy, Ethoxy, Carboxy, Sulfo oder Chlor substituiertes Phenylamino, unsubstituiertes oder im Alkylteil durch Hydroxy substituiertes N-C₁-C₄-Alkyl-N-phenylamino, Morpholino oder N-C₁-C₂-Alkylpiperazino bedeuten.

7. Verbindungen gemäss einem der Ansprüche 1 bis 6, dadurch gekennzeichnet, dass R und R' unabhängig voneinander Amino, N-C₁-C₂-Alkylamino, β-Sulfoethylamino, β-Hydroxyethylamino, N,N-Di-β-hydroxyethylamino, o-, m- oder p-Sulfophenylamino, 2,5-Disulfophenylamino, N-C₁-C₂-Alkyl-N-phenylamino, N-Hydroxyethyl-N-phenylamino oder N-C₁-C₂-Alkylpiperazino bedeuten.

8. Verbindungen gemäss einem der Ansprüche 1 bis 7, dadurch gekennzeichnet, dass R und R' identisch sind.

9. Verbindungen gemäss Anspruch 1 der Formel 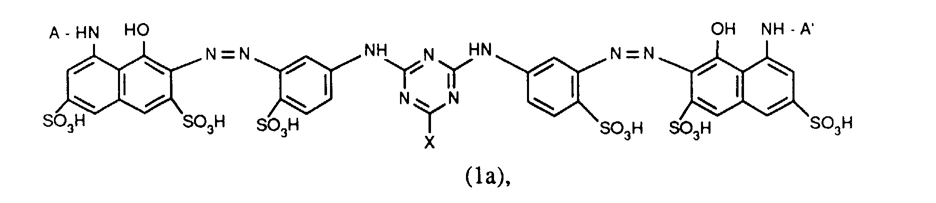 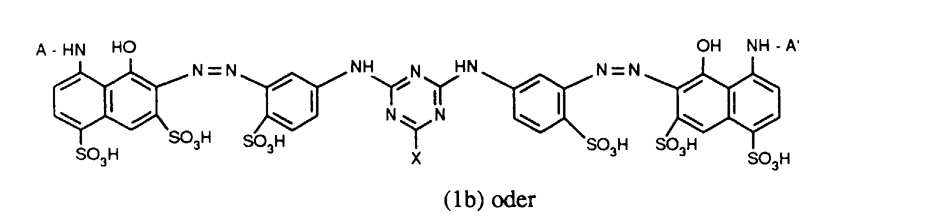 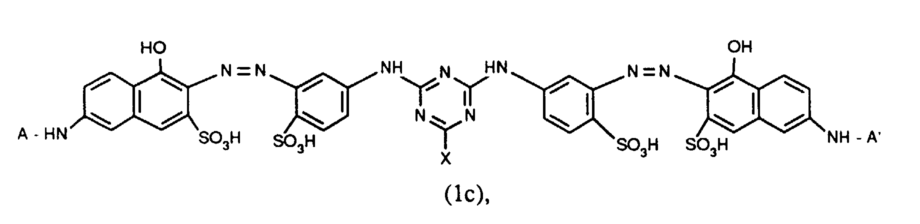 worin A und A' unabhängig voneinander je einen Rest der Formel 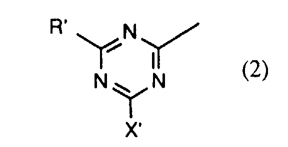 bedeuten, X und X' unabhängig voneinander je Fluor oder Chlor sind, und R' die im Anspruch 1 angegebene Bedeutung hat.

10. Verbindungen gemäss Anspruch 9, dadurch gekennzeichnet, dass X Chlor und X₁ Fluor bedeutet.

11. Verbindungen gemäss Anspruch 9 der Formel (1a), dadurch gekennzeichnet, dass X Chlor und X' Fluor sind und R' Amino, unsubstituiertes oder im Alkylteil durch Hydroxy oder Sulfo substituiertes N-Mono- oder N,N-Di-C₁-C₄-Alkylamino, unsubstituiertes oder im Phenylteil durch Methyl, Ethyl, Methoxy, Ethoxy, Carboxy, Sulfo oder Chlor substituiertes Phenylamino, unsubstituiertes oder im Alkylteil durch Hydroxy substituiertes N-C₁-C₄-Alkyl-N-phenylamino, Morpholino oder N-C₁-C₂-Alkylpiperazino bedeutet.

12. Verbindungen gemäss Anspruch 9 der Formel (1a), dadurch gekennzeichnet, dass X für Chlor und X' für Fluor steht, A und A' identisch sind und R' Amino, N-C₁-C₂-Alkyl-amino, β-Sulfoethylamino, β-Hydroxyethylamino, N,N-Di-β-hydroxyethylamino, o-, m-oder p-Sulfophenylamino, 2,5-Disulfophenylamino, N-C₁-C₂-Alkyl-N-phenylamino, N-Hydroxyethyl-N-phenylamino oder N-C₁-C₂-Alkylpiperazino bedeutet.

13. Verfahren zur Herstellung von Verbindungen der Formel (1) gemäss Anspruch 1, dadurch gekennzeichnet, dass man ein Moläquivalent einer diazotierten Verbindung der Formel 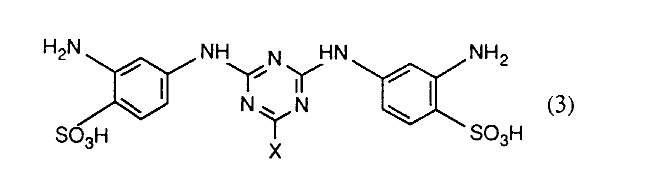 in beliebiger Reihenfolge mit einem Moläquivalent einer Verbindung der Formel 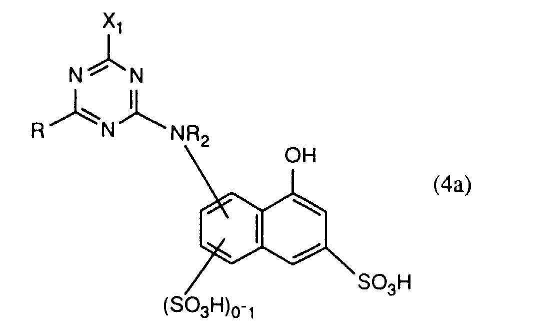 und einem Moläquivalent einer Verbindung der Formel 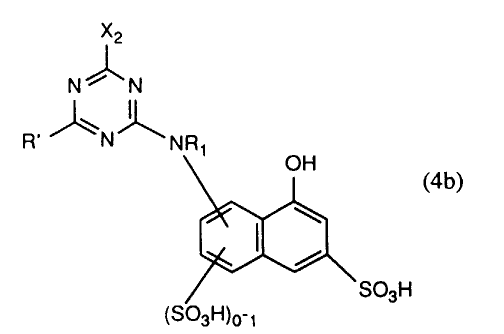 oder, wenn R₁ und R₂, R und R' und X₁ und X₂ jeweils identisch sind, mit zwei Moläquivalenten einer Verbindung der Formel (4a), kuppelt, worin R, R', R₁, R₂, X, X₁ und X₂ jeweils die im Anspruch 1 angegebene Bedeutung haben.

14. Verfahren zum Färben und Bedrucken von cellulosehaltigen Fasermaterialien, dadurch gekennzeichnet, dass man die Fasermaterialien in wässriger Lösung mit einem Farbstoff der Formel (1) gemäss Anspruch 1 behandelt.

15. Verfahren gemäss Anspruch 14, dadurch gekennzeichnet, dass es sich bei den cellulosehaltigen Fasermaterialien um Baumwolle handelt.

16. Verwendung von Farbstoffen der Formel (1) gemäss Anspruch 1 zum Färben und Bedrucken von cellulosehaltigen Fasermaterialien.

## Claims

1. A compound of formula 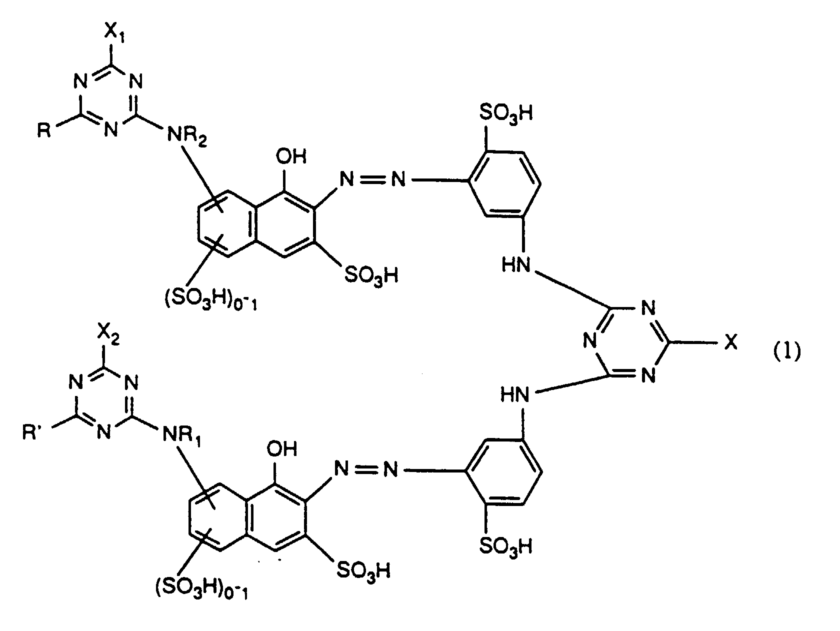 wherein X, X₁ and X₂ are each independently of one another fluoro, chloro, bromo, hydroxy, 3-carboxypyridin-1-yl or 3-carbamoylpyridin-1-yl,
R₁ and R₂ are each independently of the other hydrogen, C₁-C₄alkyl or C₁-C₄alkyl which is substituted by halogen, hydroxy, cyano, C₁-C₄alkoxy, C₁-C₄alkoxycarbonyl, carboxyl, sulfo or sulfato, and
R and R' are each independently of the other amino or amino which is substituted by non-reactive radicals;
C₁-C₄alkoxy, phenoxy, C₁-C₄alkylthio, N-C₁-C₄alkylpiperazino or morpholino.

2. A compound according to claim 1, wherein R₁ and R₂ are each hydrogen.

3. A compound according to claim 1 or 2, wherein X, X₁ and X₂ are each independently of one another chloro or fluoro.

4. A compound according to any one of claims 1 to 3, wherein X is chloro and X₁ and X₂ are each fluoro.

5. A compound according to any one of claims 1 to 4, wherein R and R' are each independently of the other -NH₂, N-mono- or N,N-di-C₁-C₄alkylamino which is unsubstituted or substituted in the alkyl moiety by hydroxy, carboxy, sulfo, sulfato or C₁-C₄alkoxy; cyclohexylamino; phenylamino or phenylamino which is substituted in the phenyl moiety by C₁-C₄alkyl, C₁-C₄alkoxy, carboxy, sulfo or halogen;
N-C₁-C₄alkyl-N-phenylamino which is unsubstituted or substituted in the phenyl moiety by C₁-C₄alkyl, C₁-C₄alkoxy, carboxy, sulfo or halogen or in the alkyl moiety by hydroxy, C₁-C₄alkoxy, sulfo or sulfato; morpholino or N-C₁-C₄alkylpiperazino.

6. A compound according to any one of claims 1 to 5, wherein R and R' are each independently of the other amino, N-mono- or N,N-di-C₁-C₄alkylamino which is unsubstituted or substituted in the alkyl moiety by hydroxy or sulfo; phenylamino which is unsubstituted or substituted in the phenyl moiety by methyl, ethyl, methoxy, ethoxy, carboxy, sulfo or chloro; N-C₁-C₄alkyl-N-phenylamino which is unsubstituted or substituted in the alkyl moiety by hydroxy; morpholino or N-C₁-C₂alkylpiperazino.

7. A compound according to any one of claims 1 to 6, wherein R and R' are each independently of the other amino, N-C₁-C₂alkylamino, β-sulfoethylamino, β-hydroxy-ethylamino, N,N-di-β-hydroxyethylamino, o-, m- or p-sulfophenylamino, 2,5-disulfophenylamino, N-C₁-C₂alkyl-N-phenylamino, N-hydroxyethyl-N-phenylamino or N-C₁-C₂alkylpiperazino.

8. A compound according to any one of claims 1 to 7, wherein R and R' are identical.

9. A compound according to claim 1 of formula 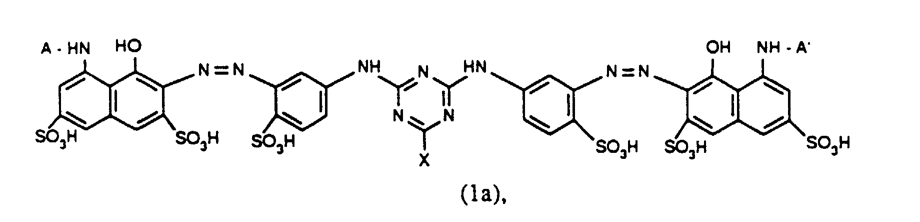 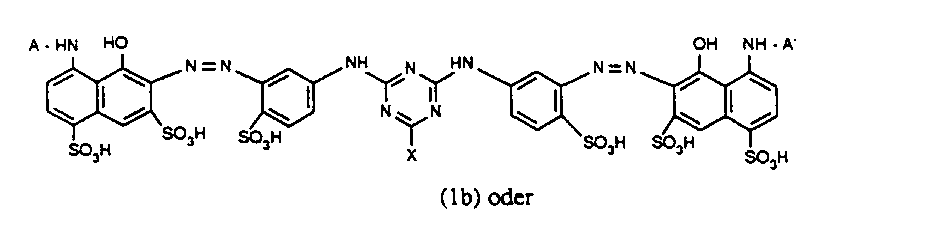 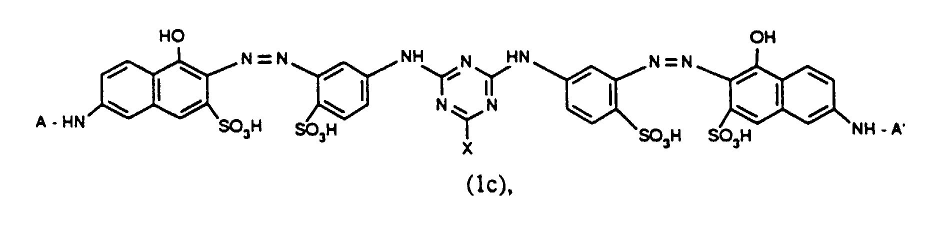 wherein A and A' are each independently of the other a radical of formula 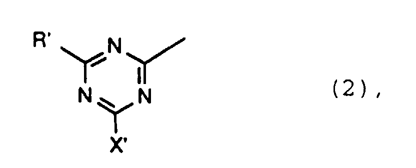 X and X' are each independently of the other fluoro or chloro, and R' is as defined in claim 1.

10. A compound according to claim 9, wherein X is chloro and X₁ is fluoro.

11. A compound according to claim 9 of formula (la), wherein X is chloro and X' is fluoro and R' is amino, N-mono- or N,N-di-C₁-C₄alkylamino which is unsubstituted or substituted in the alkyl moiety by hydroxy or sulfo; phenylamino which is unsubstituted or substituted in the phenyl moiety by methyl, ethyl, methoxy, ethoxy, carboxy, sulfo or chloro; N-C₁-C₄alkyl-N-phenylamino which is unsubstituted or substituted in the alkyl moiety by hydroxy; morpholino or N-C₁-C₂alkyl-piperazino.

12. A compound according to claim 9 of formula (la), wherein X is chloro and X' is fluoro, A and A' are identical, and R' is amino, N-C₁-C₄alkylamino, β-sulfoethylamino, β-hydroxyethylamino, N,N-di-β-hydroxyethylamino, o-, m- or p-sulfophenylamino, 2,5-disulfophenylamino, N-C₁-C₂alkyl-N-phenylamino, N-hydroxyethyl-N-phenylamino or N-C₁-C₂alkylpiperazino.

13. A process for the preparation of a compound of formula (1) according to claim 1, which comprises coupling 1 molar equivalent of a diazotised compound of formula 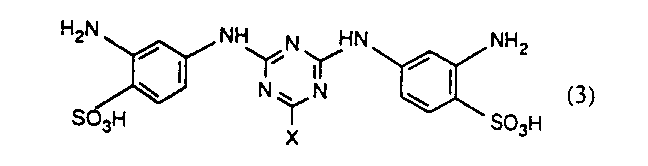 in any order with 1 molar equivalent of a compound of formula 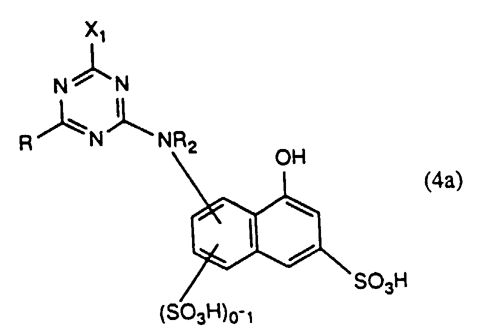 and 1 molar equivalent of a compound of formula 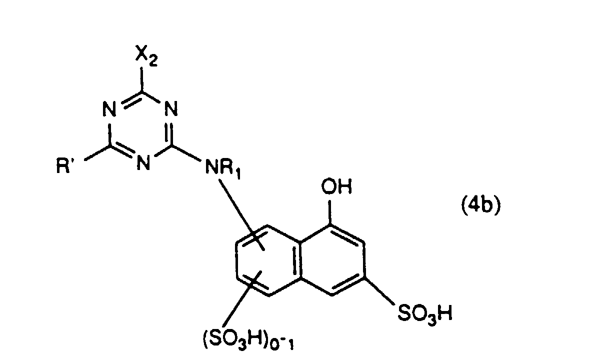 or, if R₁ and R₂, R and R' and X₁ and X₂ are each identical, with 2 molar equivalents of a compound of formula (4a), wherein R, R', R₁, R₂, X, X₁ and X₂ are each as defined in claim 1.

14. A process for dyeing and printing cellulosic fibre material, which comprises treating said material in aqueous solution with a dye of formula (1) according to claim 1.

15. A process according to claim 14, wherein the cellulosic fibre material is cotton.

16. The use of a dye of formula (1) according to claim 1 for dyeing and printing cellulosic fibre material.

## Revendications

1. Composés de formule 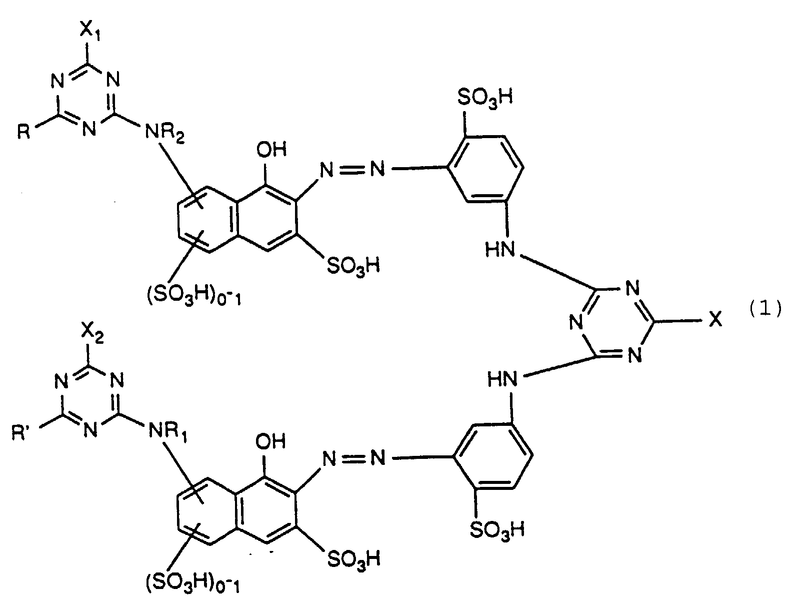 dans laquelle
X, X₁ et X₂ représentent, indépendamment les uns des autres, des atomes de fluor, de chlore, de brome, des groupes hydroxy, 3-carboxypyridin-l-yle ou 3-carbamoylpyridin-1-yle,
R₁ et R₂, représentent chacun, indépendamment l'un de l'autre, un atome d'hydrogène ou un groupe alkyle en C₁-C₄ éventuellement substitué par un atome d'halogène, des groupes hydroxy, cyano, alkoxy en C₁-C₄, alkoxycarbonyle en C₁-C₄, carboxyle, sulfo ou sulfato, et
R et R' représentent chacun, indépendamment l'un de l'autre, des groupes amino, alkoxy en C₁-C₄, phénoxy, (alkyl en C₁-C₄)thio, N-(alkyl en C₁-C₄)-pipérazino ou morpholino éventuellement substitué par des restes non réactifs sur la fibre.

2. Composés selon la revendication 1, caractérisés en ce que R₁ et R₂ chacun représentent un atome d'hydrogène.

3. Composés selon la revendication 1 ou 2, caractérisés en ce que X, X₁ et X₂ représentent chacun, indépendamment les uns des autres, des atomes de chlore ou de fluor.

4. Composés selon l'une des revendications 1 à 3, caractérisés en ce que X représente un atome de chlore et X₁ et X₂ chacun représente un atome de fluor.

5. Composés selon l'une des revendications 1 à 4, caractérisés en ce que R et R' représentent, indépendamment l'un de l'autre, le groupe -NH2, le reste N-mono- ou N,N-di(alkyl en C₁-C₄)-amino non substitué ou substitué dans la partie alkyle par des groupes hydroxy, carboxy, sulfo, sulfato ou alkoxy en C₁-C₄, le reste cyclohexylamino, le reste phénylamino non substitué ou substitué dans la partie phényle par alkyle en C₁-C₄, alkoxy en C₁-C₄, carboxy, sulfo ou des atomes d'halogène, ou N-(alkyl en C₁-C₄)-N-phénylamino non substitué ou substitué dans la partie phényle par des groupes alkyle en C₁-C₄, alkoxy en C₁-C₄, carboxy, sulfo ou des atomes d'halogène ou dans la partie alkyle par des groupes hydroxy, alkoxy en C₁-C₄, sulfo ou sulfato, représentent aussi morpholino ou N-(alkyl en C₁-C₄)-pipérazino.

6. Composés selon l'une des revendications 1 à 5, caractérisés en ce que R et R', indépendamment l'un de l'autre, représentent des groupes amino, N-mono- ou N,N-di(alkyl en C₁-C₄)amino non substitué ou substitué dans la partie alkyle par des groupes hydroxy ou sulfoxy, phénylamino non substitué ou substitué dans la partie phényle par des groupes méthyle, éthyle, méthoxy, éthoxy, carboxy, sulfo ou chloro, N-(alkyl en C₁-C₄)-N-phénylamino non substitué ou substitué dans la partie alkyle par des groupes hydroxy, représente aussi morpholino ou N-(alkyl en C₁-C₂)-pipérazino.

7. Composés selon l'une des revendications 1 à 6, caractérisés en ce que R et R' représentent, indépendamment l'un de l'autre, des groupes amino, N-(alkyl en C₁-C₂)amino, β-sulfoéthylamino, β-hydroxyéthylamino, N,N-di-β-hydroxyéthylamino, o-, m- ou p-sulfophénylamino, 2,5-disulfophénylamino, N-(alkyl en C₁-C₂)-N-phénylamino, N-hydroxyéthyl-N-phénylamino ou N-(alkyl en C₁-C₂)-pipérazino.

8. Composés selon l'une des revendications 1 à 7, caractérisés en ce que R et R' sont identiques.

9. Composés selon la revendication 1 de formule 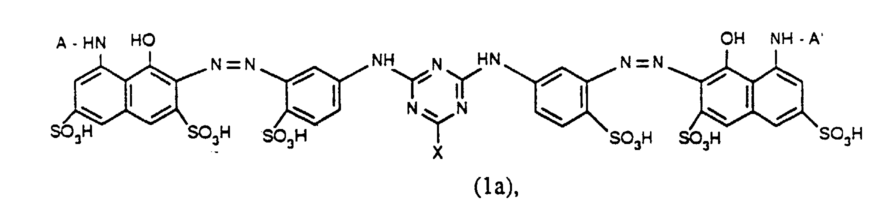 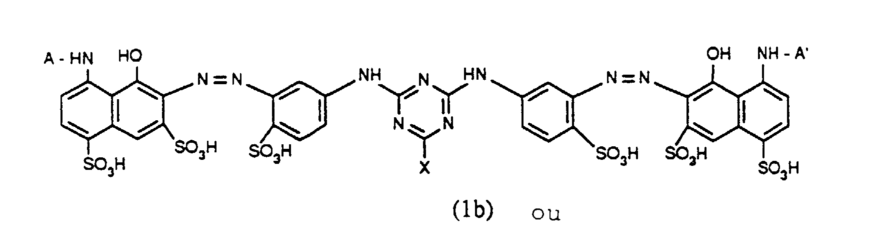 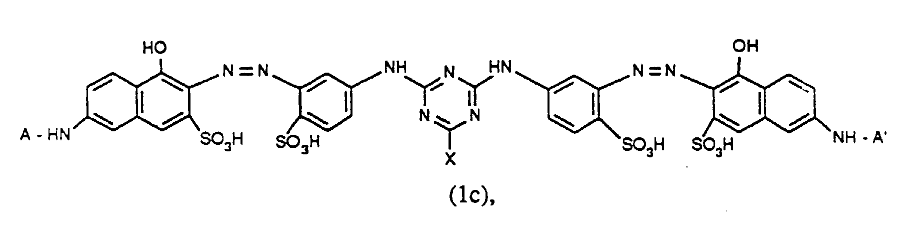 dans lesquels A et A' représentent chacun, indépendamment l'un de l'autre, un reste de formule 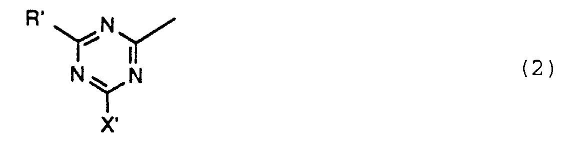 X et X' représentent chacun, indépendamment l'un de l'autre, des atomes de fluor ou de chlore, et à R' possède la signification donnée dans la revendication 1.

10. Composés selon la revendication 9, caractérisés en ce que X représente un atome de chlore et X₁ un atome de fluor.

11. Composés de formule (1a) selon la revendication 9, caractérisés en ce que X représente un atome de chlore et X' un atome de fluor et R' représente des groupes amino, N-mono- ou N,N-di-(alkyl en C₁-C₄)-amino non substitué ou substitué dans la partie alkyle par des groupes hydroxy ou sulfo, le groupe phénylamino non substitué ou substitué dans la partie phényle par des groupes méthyle, éthyle, méthoxy, éthoxy, carboxy, sulfo ou chloro, N-(alkyl en C₁-C₄)-N-phénylamino non substitué ou substitué dans la partie alkyle par un groupe hydroxy, représente aussi morpholino ou N-(alkyl en C₁-C₂)-pipérazino.

12. Composés de formule (1a) selon la revendication 9, caractérisés en ce que X représente des atomes de chlore et X' des atomes de fluor, A et A' sont identiques et R' représente des groupes amino, N-(alkyl en C₁-C₂)-amino, β-sulfoéthylamino, β-hydroxyéthylamino, N,N-di-β-hydroxyéthylamino, o-, m- ou p-sulfophénylamino, 2,5-disulfophénylamino, N-(alkyl en C₁-C₂)-N-phénylamino, N-hydroxyéthyl-N-phénylamino ou N-(alkyl en C₁-C₂)-pipérazino.

13. Procédé pour la préparation de composés de formule (1) selon la revendication 1, caractérisé en ce que l'on copule un équivalent en mole d'un composé diazoté de formule 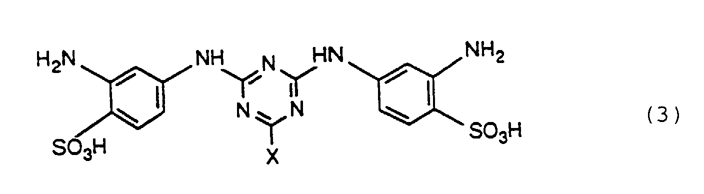 dans un ordre arbitraire avec un équivalent en mole d'un composé de formule 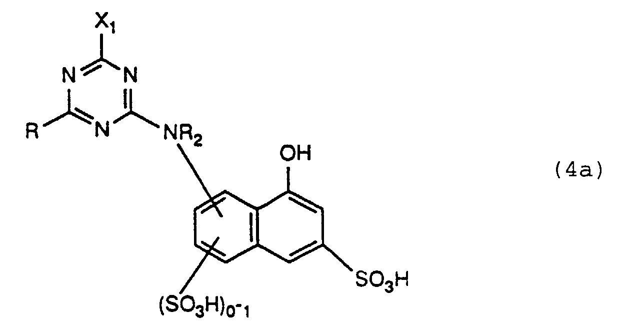 et un équivalent en mole d'un composé de formule 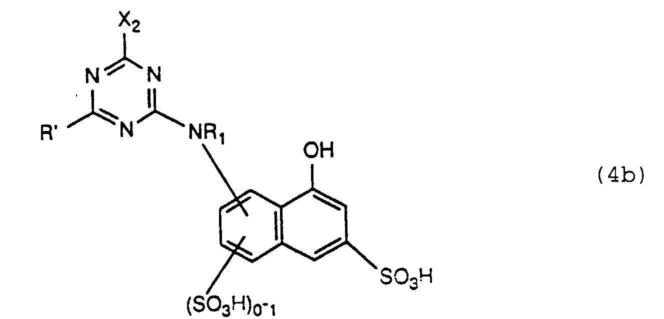 ou, lorsque à chaque fois, R₁ et R₂, R et R' et X₁ et X₂ sont identiques, avec deux équivalents en mole d'un composé de formule (4a), dans laquelle R, R', R₁, R₂, X₁ et X₂ chacun possède la signification donnée dans la revendication 1.

14. Procédé pour la teinture et l'impression de matières fibreuses cellulosiques, caractérisé en ce que l'on traite les matières fibreuses cellulosiques en solution aqueuse par un colorant de formule (1) selon la revendication 1.

15. Procédé selon la revendication 14, caractérisé en ce que pour les matières fibreuses cellulosiques, il s'agit du coton.

16. Utilisation de colorants de formule (1) selon la revendication 1, pour la teinture et l'impression de matières fibreuses cellulosiques.
